# EUROPEAN PATENT APPLICATION

(11) **EP 4 491 415 A1**
(43) Date of publication of application: **15.01.2025**
(21) Application number: 24186722.5
(22) Date of filing: 05.07.2024
(51) Int. Cl.: B60C 1/00, C08L 23/28

(54) **LOW ROLLING RESISTANCE INNERLINER COMPOSITION**

(30) Priority: 10.07.2023 US 202318349530
(71) Applicant: The Goodyear Tire & Rubber Company, Akron, OH 44316 (US)
(72) Inventor: GABRIEL, Sabine Chantal, B-4920 Harze (BE); KAES, Christian, L-9184 Schrondweiler (LU); BROEMMEL, Antonia Felicitas, D-60323 Frankfurt am Main (DE); SOSA, Aaron, L-1220 Luxembourg (LU); REGNIER, Antoine Francois, B-6717 Attert (BE); BONNET, Gilles, L-9176 Niederfeulen (LU); ANDEREZ, Gonzalez Jorge, L-2560 Luxembourg (LU)
(74) Representative: Kutsch, Bernd

(57) **Abstract**

A rubber composition for an innerliner (30) is disclosed. The rubber composition comprises 100 phr of elastomers, comprising at least 60 phr of a butyl rubber and 0 to 40 phr of a diene-based rubber; 35 to 70 phr of a reinforcing filler; and a curing system for curing the elastomers. Also, an innerliner (30) is disclosed composed of or formed from: 25 to 35 phr of natural rubber; 65 to 75 phr of a halobutyl rubber; 45 to 60 phr of calcium carbonate; 2 to 12 phr of carbon black; optionally, at least one of an oil, a plasticizer, and a tackifier resin; a sulfur based curing agent; at least 1 phr of zinc oxide; and a cure accelerator.

## Description

### FIELD

The exemplary embodiment relates to rubber composition suitable for forming an innerliner for a tire and to methods of forming the composition, innerliner, and tire.

### BACKGROUND

The inner surface of a pneumatic tire is typically formed an elastomeric composition that is designed to prevent or retard the permeation of air and moisture into the carcass from the tire's inner air chamber. The thin layer of material that defines the inner surface is generally referred to as an innerliner. Rubbers, such as halobutyl rubber and blends of butyl and halobutyl rubber, which are relatively impermeable to air, are often used as a major proportion of the innerliner.

The innerliner is generally prepared by calendering or milling techniques to form a strip of uncured compounded rubber of an appropriate width, which is sometimes referred to as a gum strip. Typically, the gum strip is the first element of the tire applied to a tire building drum, over and around which the remainder of the tire is built. When the tire is cured, the innerliner becomes an integral, co-cured, part of the tire. To improve their properties, such as air retention, tire innerliners may incorporate various additives. As a result, innerliners have conventionally been relatively stiff.

For example, U.S. Pat. No. 8,220,511 B2 describes an innerliner rubber composition containing an ethylene vinyl alcohol polymer which is dispersed in an elastomer selected from bromobutyl rubber and chlorobutyl rubber. U.S. Pub. No. 20110146870 A1 describes a tire with an innerliner containing slate powder. U.S. Pat. No. 7,506,677 B2 describes a pneumatic tire with an innerliner formed of butyl rubber and a dispersion of pre-cured diene-based rubber. U.S. Pat. No. 6,765,063 B2 describes a pneumatic tire having an innerliner of a rubber composition which contains a low molecular weight trans-1,4-polybutadiene rubber.

Described herein is an innerliner which improves the rolling resistance performance of tires while maintaining satisfactory air retention properties.

### SUMMARY OF THE INVENTION

The invention relates to a rubber composition in accordance with claim 1, to an innerliner in accordance with claim 9 or 10, respectively, to a tire in accordance with claim 11, and to a method in accordance with claim 12.

Dependent claims refer to preferred embodiments of the invention.

In a preferred aspect of the invention, the butyl rubber comprises a halobutyl rubber selected from bromobutyl rubber, chlorobutyl rubber, and mixtures thereof.

In a preferred aspect of the invention, the curing system comprises at least one of zinc oxide and a sulfur-based curing agent.

In a preferred aspect of the invention, the rubber composition comprises at least one curing aid selected from the group consisting of an organic cure activator, a cure accelerator, a cure retardant, and combinations thereof.

In a preferred aspect of the invention, the rubber composition comprises at least one processing aid, selected from the group consisting of an oil, a plasticizer, and a tackifier resin.

In accordance with one exemplary embodiment, a rubber composition for an innerliner includes 100 phr of elastomers, the elastomers including at least 60 phr of a butyl rubber, and up to 40 phr of diene-based rubber. The rubber composition further includes 35 to 70 phr of a reinforcing filler, and a curing system.

In various aspects of this embodiment:
The butyl rubber may be at least 65 phr, or no more than 80 phr, or no more than 75 phr.

The butyl rubber may include a halobutyl rubber selected from bromobutyl rubber, chlorobutyl rubber, and mixtures thereof.

The diene-based rubber may be at least 20 phr or no more than 35 phr.

The diene-based rubber may include at least one polyisoprene, such as natural rubber and/or synthetic polyisoprene.

In the rubber composition, elastomers other than butyl rubber and polyisoprene may be present at no more than 10 phr, or no more than 5 phr.

The curing system may include at least one of a sulfur-based curing agent and zinc oxide.

The rubber composition may further include at least one curing aid selected from an organic cure activator, a cure accelerator, a cure retardant, and combinations thereof.

The reinforcing filler may include, or consist of, at least one of calcium carbonate and magnesium carbonate. The calcium carbonate and/or magnesium carbonate may be present in the rubber composition at 35 to 70 phr or at 45 to 60 phr.

The reinforcing filler may include rubber-reinforcing carbon black at 1 to 20 phr, or at no more than 12 phr, or at no more than 10 phr.

The reinforcing filler may include calcium carbonate and rubber-reinforcing carbon black in a ratio by weight of at least 4:1, or at least 5:1, and/or up to 30:1.

The rubber composition may further include at least one processing aid, selected from an oil, a plasticizer, a tackifier resin, and a mixture thereof.

In another aspect, an innerliner is formed by curing the rubber composition of any of the aspects described above.

In another aspect, a pneumatic tire includes an innerliner formed by curing the rubber composition of any of the aspects described above.

In accordance with another exemplary embodiment, a method of forming an innerliner of a tire includes forming a mixture which includes 100 phr of elastomers, the elastomers including at least 60 phr of a butyl rubber and up to 40 phr of diene-based rubber, 35 to 70 phr of a reinforcing filler including calcium carbonate and carbon black, and at least one of a sulfur-based curing agent, and zinc oxide. The method further includes shaping the mixture to form a gum strip and curing the gum strip to form the innerliner of the tire.

In various aspects of this embodiment:
The formed mixture has a Mooney viscosity of 10-26 M.U., or 18-23 M.U.

In the curing, the innerliner becomes an integral part of the tire.

In accordance with another exemplary embodiment, an innerliner is composed of or formed from 20 to 35 phr of natural rubber; 65 to 80 phr of a halobutyl rubber; 45 to 60 phr of calcium carbonate; 2 to 12 phr of carbon black; at least 1 phr of zinc oxide; a sulfur based curing agent; and a cure accelerator; and optionally, at least one of an oil, a plasticizer, and a tackifier resin.

### BRIEF DESCRIPTION OF THE DRAWINGS

FIGURE 1 is a schematic cross-sectional view of a passenger vehicle tire in accordance with one embodiment; and
FIGURE 2 is a plot of air diffusion vs G" for innerliner samples.

### DETAILED DESCRIPTION OF PREFERRED EMBODIMENTS OF THE INVENTION

In an exemplary embodiment, a pneumatic rubber tire has an integral innerliner formed from a cured rubber composition. The innerliner has good air retention and lower stiffness and hysteresis, which provides the tire with a low rolling resistance. The rolling resistance contribution of the innerliner is strain controlled, with a lower loss modulus G" indicating lower rolling resistance.

The exemplary rubber composition has a low filler content (e.g., comprising of, or consisting of, at least one of calcium carbonate and magnesium carbonate, and optionally carbon black). The butyl rubber content of the rubber composition may be relatively high, such as at least 60 phr.

In another aspect of the exemplary embodiment, a rubber composition with low stiffness and a high butyl level meets a standard air diffusion test and shows improvements in rolling resistance.

In the description of the invention, the term "phr" relates to parts by weight of a particular ingredient per 100 parts by weight of uncured rubber contained in a rubber composition.

The terms "rubber" and "elastomer" are used interchangeably unless otherwise indicated.

The terms "cure" and vulcanize" are used interchangeably unless otherwise indicated.

The term "butyl rubber" is used herein to refer to butyl rubber (a copolymer of isobutylene and isoprene), and also to halobutyl rubber, such as chlorobutyl rubber and bromobutyl rubber (chlorinated and brominated butyl rubber, respectively) unless otherwise indicated.

With reference to FIGURE 1, a pneumatic tire 10 includes a tire tread 12, which defines a road-contacting surface of the tire. Two sidewalls 14, 16, extend from the tread to respective bead regions 18, 20. Each bead region includes a bead or beads 22, 24, that may be held in place by respective bead filler apexes 26, 28. An innerliner 30, defines an inner-most surface of the tire and is joined, at each end, to the respective sidewall 14, 16.

The tire may also include a set of belt plies 32 and a carcass ply 36, interior of the belt plies. The illustrated carcass ply 36 includes a pair of axially opposite end portions 38, 40, each of which is associated with a respective one of the beads 22, 24. Each axial end portion 38, 40 of the carcass ply 36 may be turned up and around the respective bead to a position to anchor the respective axial end portion. The turned-up portion 38, 40 of the carcass ply may engage the axial outer surfaces of respective flippers 42, 44 and axial inner surfaces of respective chippers 46, 48. The example tread 10 has circumferential grooves (four in the illustrated embodiment), each groove defining a U-shaped depression in the tread 10. The tread 12, sidewalls, and carcass may be formed of one or more rubber-based compositions. The example tire is suitable, for example, for mounting on a rim of a vehicle, e.g., a truck or a passenger car. As will be appreciated, the general construction of the tire 10 may differ from that illustrated in FIGURE 1 and may include fewer or more components.

The present innerliner may be used as an integral innerliner 30 in a pneumatic tire as shown in FIGURE 1. However, it is to be appreciated that the tire may have a different configuration to that shown. The innerliner may be formed from a cured rubber composition which includes, based upon parts by weight per 100 parts by weight of total rubber (phr):
(A) 100 phr of vulcanizable elastomers including:
   (1) at least 60 phr of a butyl rubber; and
   (2) up to 40 phr of diene-based rubber;
(B) 35 to 70phr of a reinforcing filler, such as:
   (1) One or more mineral fillers, such as calcium carbonate and/or magnesium carbonate; and
   (2) No more than 20 phr of rubber-reinforcing carbon black;
(C) optionally, one or more processing aids, such as one or more of an oil, a plasticizer, and a tackifier resin; and
(D) optionally, one or more antidegradants, such as one or more of an antiozonant and an antioxidant;
(E) a curing system including at least one of a sulfur-based curing agent and zinc oxide; and
(F) optionally, or more curing aids, other than zinc oxide, such as one or more of an organic cure activator, a cure accelerator, and a cure retardant.

### A: The Elastomers

### 1. The Butyl Rubber

Butyl rubber is a copolymer of isobutylene and isoprene. The butyl rubber may be a non-halogenated butyl rubber and/or a halobutyl rubber, such as bromobutyl rubber, chlorobutyl rubber, partially depolymerized bromobutyl rubber, partially depolymerized chlorobutyl butyl rubber, and partially depolymerized butyl rubber, and their mixtures.

In one embodiment, the butyl rubber comprises bromobutyl rubber.

The butyl rubber is the major component of the elastomers in the rubber composition and may be up to 100 phr (i.e., no other elastomers). The butyl rubber may be at least 60 phr, or at least 65 phr, or up to 80 phr, or up to 75 phr, such as 65-75 phr.

### 2. The Diene-Based Elastomer

The diene-based elastomer may be selected from polymers of at least one of isoprene and 1,3-butadiene, copolymers of styrene and at least one of isoprene and 1,3-butadiene, derivatives thereof, and their mixtures. For example, the diene-based elastomer may be selected from polyisoprenes, such as natural rubber (predominantly cis-1,4-polyisoprene) and synthetic cis-1,4-polyisoprene; methylbutadiene; dimethylbutadiene; pentadiene; and mixtures thereof.

In one embodiment, the diene-based elastomer includes or consists of a polyisoprene selected from natural rubber and synthetic polyisoprene. In some embodiments, the natural rubber may include or consist of a modified natural rubber, such as a deproteinized natural rubber (DPNR), epoxidized natural rubber (ENR), hydrogenated natural rubber (HNR), grafted natural rubber, or mixture thereof. In some embodiments, the synthetic polyisoprene rubber may include or consist of a modified synthetic polyisoprene rubber, such as a deproteinized, epoxidized hydrogenated and/or grafted synthetic cis-1,4-polyisoprene, or mixture thereof.

As used herein, the term "natural rubber" means naturally-occurring rubber, such as can be harvested from sources such as Hevea rubber trees and non-Hevea sources (e.g., guayule shrubs and dandelions such as TKS). In other words, the term "natural rubber" should be construed so as to exclude synthetic polyisoprene. Natural rubber produced from field grade coagulum (cuplump) from the Hevea brasiliensis tree is a common form of natural rubber. For example, technically specified or block rubber (TSR), is a natural rubber available from Indonesia, where it may be referred to as Standard Indonesian Rubber (SIR), Malaysia (SMR), and Thailand (STR). It can be obtained in a number of grades, including TSR 10 and TSR 20, with the TSR 10 grade being of higher purity.

In one embodiment, natural rubber is the predominant (highest phr) of the diene-based rubbers used in the composition.

Other diene-based elastomers which may be used include styrene-butadiene rubber, styrene/isoprene/butadiene rubber, alkoxy-silyl end functionalized solution polymerized polymers (SBR, PBR, IBR and SIBR), and silicon-coupled and tin-coupled star-branched polymers.

The rubber composition may be free of the diene-based elastomer described herein. In another embodiment, the rubber composition includes at least 10 phr of diene-based elastomer(s), such as natural rubber. Diene-based elastomers, e.g., natural rubber, may be at least 25 phr in the rubber composition, or up to 40 phr, or up to 35 phr.

Apart from the conjugated diene-base elastomer and the natural rubber present in the rubber composition, other suitable vulcanizable elastomers, which can be used in minor amounts (e.g., less than 10 phr, or up to 5 phr, or up to 2 phr) may be selected from nitrile rubber, liquid rubbers, polynorbornene copolymer, ethylene-propylene-diene rubber, chloroprene rubber, acrylate rubber, fluorine rubber, silicone rubber, polysulfide rubber, epichlorohydrin rubber, styrene-isoprene-butadiene terpolymer, hydrated acrylonitrile butadiene rubber, isoprene-butadiene copolymer, butyl rubber, hydrogenated styrene-butadiene rubber, butadiene acrylonitrile rubber, a terpolymer formed from ethylene monomers, propylene monomers, and/or ethylene propylene diene monomer (EPDM), isoprene-based block copolymers, butadiene-based block copolymers, styrenic block copolymers, styrene-butadiene-styrene block copolymer (SBS), styrene-ethylene/butylene-styrene block copolymer (SEBS), styrene-[ethylene-(ethylene/propylene)]-styrene block copolymer (SEEPS), styrene-isoprene-styrene block copolymer (SIS), random styrenic copolymers, hydrogenated styrenic block copolymers, styrene butadiene copolymers, polyisobutylene, ethylene vinyl acetate (EVA) polymers, polyolefins, amorphous polyolefins, semi-crystalline polyolefins, alpha-polyolefins, reactor-ready polyolefins, acrylates, metallocene-catalyzed polyolefin polymers and elastomers, reactor-made thermoplastic polyolefin elastomers, olefin block copolymer, co-polyester block copolymer, polyurethane block copolymer, polyamide block copolymer, thermoplastic polyolefins, thermoplastic vulcanizates, ethylene vinyl acetate copolymer, ethylene n-butyl acrylate copolymer, ethylene methyl acrylate copolymer, neoprene, acrylics, urethane, poly(acrylate), ethylene acrylic acid copolymer, polyether ether ketone, polyamide, atactic polypropylene, polyethylene including atactic polypropylene, ethylene-propylene polymers, propylene-hexene polymers, ethylene-butene polymers, ethylene octene polymers, propylene-butene polymers, propylene-octene polymers, metallocene-catalyzed polypropylene polymers, metallocene-catalyzed polyethylene polymers, ethylene-propylene-butylene terpolymers, copolymers produced from propylene, ethylene, C₄-C₁₀ alpha-olefin monomers, polypropylene polymers, maleated polyolefins, polyester copolymers, copolyester polymers, ethylene acrylic acid copolymer, and/or polyvinyl acetate, and/or wherein the polymer optionally comprises a modification and/or functionalization selected from one or more of hydroxyl-, ethoxy-, epoxy-, siloxane-, amine-, aminesiloxane-, carboxy-, phthalocyanine-, and silane-sulfide-groups, at the polymer chain ends or pendant positions within the polymer, and mixtures thereof.

### B Reinforcing Fillers

The rubber composition may include at least 35 phr of filler, or at least 40 phr, or at least 50 phr, or up to 90 phr, or up to 80 phr, or up to 70 phr, or up to 60 phr or up to 50 phr of fillers, in total. The filler may be selected from mineral fillers, carbon black, and mixtures thereof.

### (1) Mineral Filler

Examples of mineral fillers which can be used in the rubber composition include calcium carbonate, magnesium carbonate, silica, talc, clay, mica, alumina, aluminum hydroxide, magnesium hydroxide, boron nitride, aluminum nitride, titanium dioxide, and mixtures thereof.

In one embodiment, the mineral filler includes calcium carbonate (CaCO₃). In one specific embodiment, calcium carbonate is the only mineral filler used.

The rubber composition may include at least 35 phr of calcium carbonate, or at least 40 phr, or at least 45 phr, or up to 70 phr, or up to 65 phr, or up to 60 phr of calcium carbonate.

In one embodiment calcium carbonate is present at 60 parts per hundred filler by weight (phf), or higher, such as at least 70 phf, or at least 80 phf, or at least 90 phf, or up to 100 phf, wherein the total amount of filler includes all carbon-based fillers and all mineral fillers present.

In other embodiments, all or a portion of the calcium carbonate may be replaced with magnesium carbonate.

In one embodiment, the rubber composition may also include silica, e.g., at least 1 phr of silica, or at least 3 phr, or at least 5 phr, or up to 40 phr, or up to 30 phr, or up to 20 phr, or up to 8 phr, or up to 6 phr of silica. In another embodiment, silica may be omitted from the rubber composition or present at 1 phr or less.

The silica may be amorphous (e.g., precipitated) silica and/or crystalline silica. The term "silica" is used herein to refer to silicon dioxide, SiOz (which may contain minor amounts of impurities, generally less than 1 wt. %, resulting from the process in which the silica is formed). The term "precipitated silica" is used to refer to synthetic amorphous silica, typically obtained by a process in which a silicate is precipitated with an acidifying agent. Precipitated silica may be prepared by digesting amorphous silica, e.g., found in rice husks or other biological wastes, with sodium hydroxide to form sodium silicate and precipitating silica from the sodium silicate by reaction with an acidifying agent, such as sulfuric acid or carbon dioxide. Alternatively, silica can be produced from silica gel, for example, by hydrophobating a silica hydrogel with an organomercaptosilane and alkyl silane and drying the product. Methods for the preparation of precipitated silica are disclosed, for example, in U.S. Pat. Nos. 5,587,416 A, 5,708,069 A, and 9,359,215 B2, and U.S. Pub. Nos. 20020081247 A1, and 20050032965 A1.

The silica used in the reinforcing filler may have a CTAB specific surface area, according to ASTM D6845-20, "Standard Test Method for Silica, Precipitated, Hydrated-CTAB (Cetyltrimethylammonium Bromide) Surface Area," of at least 20 m²/g, or at least 120 m²/g, or at least 140 m²/g, and/or to 500 m²/g, or up to 400 m²/g, or up to 300 m²/g.

In one embodiment, the silica may have been surface treated, e.g., with a coupling agent and/or a polyalkylene oxide, such as polyethylene glycol, prior to incorporating the pretreated silica into the rubber composition. The pretreatment may serve to enhance dispersion and/or adherence of the silica to the elastomers. In another embodiment, the silica may be treated in situ, within the rubber composition, generally prior to addition of the curing agent, with a coupling agent and/or polyalkylene oxide.

Representative coupling agents include bis(3-trialkoxysilylpropyl) polysulfides wherein at least two, and optionally all three, of its alkoxy groups are ethoxy groups and its polysulfidic bridge has an average of at least 2 connecting sulfur atoms, such as up to 4, or up to 2 connecting sulfur atoms and an alkoxyorganomercaptosilane which may optionally have its mercapto moiety blocked with a suitable blocking agent during the mixing thereof with the rubber composition. The alkoxy group may be, for example, an ethoxy group.

The rubber composition may also contain, for example, at least one of talc, clay, mica and, and their mixtures, in a range, for example, of about 2 to 25 phr, or up to 5 phr, depending upon various physical properties desired for the innerliner composition.

### (2) Carbon Black

In one embodiment, the rubber composition includes carbon black, e.g., at least 1 phr of carbon black, or at least 2 phr, or at least 3 phr, or up to 20 phr, or up to 12 phr, or up to 10 phr of carbon black. In another embodiment, carbon black may be omitted from the rubber composition.

The carbon black, where present in the rubber composition, may be a single reinforcing carbon black or may include two or more different types of carbon black.

Carbon blacks useful in the rubber composition may have a nitrogen surface area (NSA) of from 15 m²/g to 300 m²/g, or at least 40 m²/g, as determined according to ASTM D6556-21, "Standard Test Method for Carbon Black-Total and External Surface Area by Nitrogen Adsorption". Exemplary carbon blacks include ASTM designations N110, N121, N134, N220, N231, N234, N242, N293, N299, N315, N326, N330, N332, N339, N343, N347, N351, N358, N375, N539, N550, N582, N630, N642, N650, N660, N683, N754, N762, N765, N774, N787, N907, N908, N990 and N991, as specified by ASTM D1765-21, "Standard Classification System for Carbon Blacks Used in Rubber Products."

In one embodiment, the carbon black is pretreated prior to forming the rubber composition, e.g., with silicon. One example silicon-treated carbon black is available from Cabot Corporation as CRX^{™} 2000 ECOBLACK^{®}.

In one embodiment, the reinforcing filler comprises or consists of calcium carbonate and carbon black in a ratio by weight of calcium carbonate to rubber-reinforcing carbon black is at least 4:1, or at least 4.5:1, or at least 5:1, and/or up to 30:1.

### C. Processing aids

Processing aids may be used in the rubber composition at a total of 0 to 10.0 phr, or at least 0.5 phr, or at least 1 phr, or up to 6 phr, or up to 2 phr, and may include one or more of a processing oil, a plasticizer, such as a hydrocarbon resin, a wax, and a tackifier resin.

### (1) Processing Oils

Processing oils are oils that are used in the non-productive stage of forming the rubber composition and aid in processing the composition, as well as, in some cases, providing beneficial properties to the cured rubber composition. Processing oils are liquid at room temperature (i.e., liquid at 25°C and above, at atmospheric pressure). Generally, oils and other liquid plasticizers have a Tg that is below 0°C, generally well below, such as less than -30°C, or less than -40°C, or less than -50°C, such as a Tg of 0°C to -100°C. The Tg of the oil or oils used may be -40°C to -100°C. The glass transition temperature (Tg) of an elastomer or oil is determined according to DIN 53445, "Torsion Pendulum Test, Testing of Polymer Materials" (1986), at a heating rate of 1° C per minute unless otherwise indicated.

The rubber composition may include at least 0.5 phr, or at least 1 phr, or up to 5 phr, or up to 4 phr, or up to 3 phr, or up to 2 phr of processing oils. In another embodiment, processing oils may be omitted from the rubber composition.

Exemplary processing oils include petroleum oils, plant-based oils, and mixtures thereof. Petroleum based oils may include aromatic, naphthenic, low polycyclic aromatic (PCA) oils, and mixtures thereof. Plant-based oils may include oils harvested from vegetables, nuts, seeds, and derivatives thereof, such as triglycerides and esterified alkoxylated polyols. The exemplary processing oil comprises or consists of a blend of a plant-based triglyceride oil and an esterified alkoxylated polyol, which may also be plant-based. Other processing oils are also contemplated.

### (2) Plasticizers

Example plasticizers for the rubber composition include alkylated and aromatic hydrocarbon resins. The rubber composition may include at least 0.2 phr, or at least 0.5 phr, or up to 4 phr, or up to 3 phr, or up to 2 phr of plasticizers. In another embodiment, such plasticizers may be omitted from the rubber composition.

Example hydrocarbon resins may have a Tg of at least 30°C, or up to 50°C. Hydrocarbon resin Tg can be determined by DSC, according to the procedure discussed above for elastomer Tg measurements. The hydrocarbon resin may have a softening point of at least 70°C, or up to 100°C. The softening point of a hydrocarbon resin is generally related to the Tg. The Tg is generally lower than its softening point, and the lower the Tg the lower the softening point.

Examples of aliphatic resins include C5 fraction homopolymer and copolymer resins. Examples of cycloaliphatic resins include cyclopentadiene ("CPD") homopolymer or copolymer resins, dicyclopentadiene ("DCPD") homopolymer or copolymer resins, and combinations thereof.

Examples of aromatic resins include aromatic homopolymer resins and aromatic copolymer resins. An aromatic copolymer resin refers to a hydrocarbon resin which comprises a combination of one or more aromatic monomers in combination with one or more other (non-aromatic) monomers, with the majority by weight of all monomers generally being aromatic.

Specific examples of aromatic resins include coumarone-indene resins, alkylphenol resins, and vinyl aromatic homopolymer or copolymer resins. Examples of alkylphenol resins include alkylphenol-acetylene resins such as p-tert-butylphenol-acetylene resins, alkylphenol-formaldehyde resins (such as those having a low degree of polymerization). Vinyl aromatic resins may include one or more of the following monomers: alpha-methylstyrene, styrene, ortho-methylstyrene, meta-methylstyrene, para-methylstyrene, vinyltoluene, para(tert-butyl)styrene, methoxystyrene, chlorostyrene, hydroxystyrene, vinylmesitylene, divinylbenzene, vinyl naphthalene and the like. Examples of vinylaromatic copolymer resins include vinylaromatic/terpene copolymer resins (e.g., limonene/styrene copolymer resins), vinylaromatic/C5 fraction resins (e.g., C5 fraction/styrene copolymer resin), vinyl aromatic/aliphatic copolymer resins (e.g., CPD/styrene copolymer resin, and DCPD/styrene copolymer resin).

In the case of an aromatic resin based upon one or more of the above-mentioned vinyl aromatic monomers (e.g., styrene, alpha-methylstyrene), at least 80% by weight, or at least 85% by weight, or at least 90% by weight, or at least 95% by weight, or up to 100% by weight of the monomers in the aromatic resin may be aromatic monomers.

### (3) Tackifier Resins

Tackifier resins are added to rubber compounds to help bond different parts of a tire together until they are cured, as well as to have tackiness between the layers of the rubber compound during the processing stage. Tackifier resins are generally solid at room temperature. Example tackifier resins which may be used in the rubber composition include unreactive phenol formaldehyde resins, aromatically-modified terpene resins, aromatically modified terpene phenol resins, and resins prepared by polymerizing 2-methyl-2-butene and piperylene with additional unsaturated hydrocarbons that contain from 4 to 18 carbon atoms.

In one embodiment, such tackifier resins may be absent from the rubber composition. In another embodiment, the rubber composition may include at least 0.1 phr, or at least 0.2 phr, or up to 2 phr, or up to 1 phr of tackifier resins.

### (4) Waxes

Suitable waxes, particularly microcrystalline waxes, may be of the type shown in The Vanderbilt Rubber Handbook (1978), pp. 346 and 347. Example waxes include C₂₂-C₆₀ saturated hydrocarbons, which may be branched or unbranched, and mixtures thereof. The wax(es), where used, may be present in the rubber composition at 1 to 5 phr. In other embodiments, waxes are absent from the rubber composition.

In addition to one or more of the above processing aids, the rubber composition may include a peptizer, such as pentachlorothiophenol, dibenzamidodiphenyl disulfide, or a mixture thereof. Typical amounts of peptizer, if used, may be 0.1 phr to 1 phr.

### D. Antidegradants (Antioxidants, Antiozonants)

In some embodiments, in particular when the elastomers include natural rubber, the rubber composition may include one or more antidegradants, such as antiozonants and/or antioxidants. These compounds assist in protecting the tire against oxidation and ozonation. Representative antidegradants include amine based antioxidants, such as monophenols, bisphenols, thiobisphenols, polyphenols, polymeric hindered phenols, hydroquinone derivatives, phosphites, phosphate blends, thioesters, naphthylamines, diphenol amines as well as other diaryl amine derivatives, para-phenylene diamines (PPDs), quinolines, and blended amines. Exemplary amine-based antioxidants include diphenyl-p-phenylenediamine, N-(1,3-dimethylbutyl)-N'-phenyl-p-phenylenediamine (6PPD), oligomerized 2,2,4-trimethyl-quinoline (TMQ), and others, such as those disclosed in The Vanderbilt Rubber Handbook (1978), pages 344-347. Antioxidants may be at least 0.1 phr, or at least 0.3 phr, or at least 1 phr, or at least 2 phr, or up to 10 phr, or up to 5 phr of the rubber composition. In another embodiment, antioxidants are absent from the rubber composition.

Exemplary antiozonants include physical protectants such as waxes. Suitable waxes include paraffin waxes and microcrystalline waxes, which may be of the type described in The Vanderbilt Rubber Handbook (1978), pp. 346 and 347. The wax(es) may be present at 0.1 phr, or more, such as at least 0.3 phr, or at least 0.5 phr, or up to 5 phr, or up to 2 phr. In another embodiment, antiozonants are absent from the rubber composition.

### E. Curing System

The exemplary curing system may include a sulfur-based curing agent, such as elemental sulfur (free sulfur), insoluble polymeric sulfur, soluble sulfur, and sulfur donating vulcanizing agents, for example, an amine disulfide, polymeric polysulfide, or sulfur olefin adduct, and mixtures thereof.

The sulfur-based curing agent may be used in an amount of from 0.1 to 10 phr, such as at least 0.3 phr, or at least 0.4 phr, or at least 0.6 phr, or up to 2 phr, or up to 1.5 phr, or up to 1 phr, or up to 0.8 phr in the rubber composition.

In other embodiments, for example when there is no polyisoprene present in the rubber composition, the sulfur-based curing agent may be omitted.

Zinc oxide (ZnO), where present, serves as a crosslinking (i.e., curing) agent for the halobutyl rubber while also serving as an activator for the sulfur-based curing agent that cures the diene elastomer. Zinc oxide may be present in an amount of at least 1 phr, e.g., at least 2 phr, or at least 3 phr, or up to 10 phr, or up to 8 phr, or up to 7 phr or up to 5 phr.

### F. Organic Cure Activators, Cure Accelerators, and Cure Retardants

### (1) Organic Cure Activator

Cure activators are additives which are used to support vulcanization. Cure activators include both inorganic cure activators (such as zinc oxide, noted above) and organic cure activators.

Organic cure activators include stearic acid, palmitic acid, lauric acid, mixtures thereof, zinc salts of each of the foregoing, and thiourea compounds, e.g., thiourea, and dihydrocarbylthioureas such as dialkylthioureas and diarylthioureas, and mixtures thereof. Specific thiourea compounds include N,N'-diphenylthiourea, trimethylthiourea, N,N'-diethylthiourea (DEU), N,N'-dimethylthiourea, N,N'-dibutylthiourea, ethylenethiourea, N,N'-diisopropylthiourea, N,N'-dicyclohexylthiourea, 1,3-di(o-tolyl)thiourea, 1,3-di(p-tolyl)thiourea, 1,1-diphenyl-2-thiourea, 2,5-dithiobiurea, guanylthiourea, 1-(1-naphthyl)-2-thiourea, 1-phenyl-2-thiourea, p-tolylthiourea, and o-tolylthiourea. One commonly used organic cure activator is a blend of stearic, palmitic, and oleic acid, with stearic acid being a major component of the blend.

The total amount of organic cure activator(s), when used, may be from 0.1 to 10 phr, such as at least 0.5 phr, or at least 2 phr, or at least 3 phr, or up to 8 phr. In another embodiment, organic cure activators are omitted from the rubber composition.

### (2) Cure Accelerator

Cure accelerators act as catalysts for the sulfur-based curing agent. Accelerators are used to control the time and/or temperature required for vulcanization and to improve the properties of the vulcanizate. A single accelerator system may be used, i.e., primary accelerator in amounts ranging from about 0.5 to 8.0 phr. In the alternative, combinations of two or more accelerators may be used which may consist of a primary accelerator which is generally used in the larger amount (0.3 to 3.0 phr), and a secondary accelerator which is generally used in smaller amounts (0.05 to 1.0 phr) in order to activate and to improve the properties of the vulcanizate.

Suitable cure accelerators include amines, disulfides, guanidines, thioureas, thiazoles, thiurams, sulfenamides, dithiocarbamates, xanthates and mixtures thereof. Examples of disulfides include alkylphenol disulfide polymers, such as poly-tert-butylphenol disulfide. Examples of thiazole cure accelerators include 2-mercaptobenzothiazole and 2,2'-dithiobis(benzothiazole) (MBTS). Examples of sulfenamide cure accelerators include benzothiazole sulfenamides, such as N-cyclohexyl-2-benzothiazolesulfenamide (CBS), and N-tert-butyl-2-benzothiazolesulfenamide (TBBS). Guanidine cure accelerators include diphenyl guanidine (DPG).

Other example accelerators which may be used include 1,6-bis(N,N'-dibenzylthiocarbamoyldithio)hexane (BDBZTH), tetrabenzylthiuram disulfide (TBzTD), tetramethyl thiuram monosulfide (TMTM), tetramethyl thiuram disulfide (TMTD), tetraethyl thiuram disulfide (TETD), tetraisobutyl thiuram disulfide (TiBTD), dipentamethylene thiuram tetrasulfide (DPTT), zinc dibutyl dithiocarbamate (ZDBC), zinc diethyl dithiocarbamate, zinc dimethyl dithiocarbamate, copper dimethyl dithiocarbamate, tellurium diethyl dithiocarbamate (TDEC), zinc dibenzyl dithiocarbamate (ZBED), zinc diisononyl dithiocarbamate, zinc pentamethylene dithiocarbamate, zinc dibenzyl dithiocarbamate (ZBEC), zinc isopropyl xanthate (ZIX), zinc butyl xanthate (ZBX), sodium ethyl xanthate (SEX), sodium isobutyl xanthate (SIBX), sodium isopropyl xanthate (SIPX), sodium n-butyl xanthate (SNBX), sodium amyl xanthate (SAX), potassium ethyl xanthate (PEX), potassium amyl xanthate (PAX), zinc 2-ethylhexylphosphorodithioate (ZDT/S), and mixtures thereof.

In some cases, a combination of accelerators is used, with one acting faster than the other. Combinations of these accelerators have been known to produce a synergistic effect on the final properties and are somewhat better than those produced by either accelerator alone. In addition, delayed action accelerators may be used which are not affected by normal processing temperatures but which produce satisfactory cures at ordinary vulcanization temperatures. As the primary accelerator, a disulfide or sulfenamide may be used.

The cure accelerator may be incorporated in the rubber composition at from 0.1 to 10 phr, or at least 0.5 phr, or at least 1 phr, or at least 1.5 phr, or up to 8 phr, or up to 7 phr, or up to 6 phr. The amount of cure accelerator may be selected to provide an acceptable cure time, such as under 90 minutes.

### 3) Cure Retardant

Cure retardants can be used to control the curing process and generally retard or inhibit curing until the desired time and/or temperature is reached. Example cure retardants include cyclohexylthiophthalimide.

The amount of cure retardant, when used, may be at least 0.1 phr, or up to 3 phr, or up to 2 phr.

In one embodiment, cure retardants are omitted from the rubber composition.

### Preparation of the Rubber Composition

Rubber compositions may be prepared by mixing the elastomers, mineral fillers, and carbon black, and other rubber compounding ingredients, not including the curing system (sulfur-based curing agent and/or zinc oxide), in at least one sequential mixing stage with at least one mechanical mixer, usually referred to as "non-productive" mixing stage, or stage(s), to an elevated temperature under high shear rubber mixing conditions, followed by a final "productive" mixing stage, in which a cure package, such as a sulfur-based curing agent, zinc oxide, and one or more cure accelerators, is added to the mixture and mixed at a lower mixing temperature to avoid unnecessarily pre-curing the rubber mixture during the productive mixing stage.

The ingredients may be mixed in the non-productive mixing stage(s) for about 2-3 minutes to a temperature of 130°C to 200°C, e.g., about 140° to 160°C. Two or more non-productive stages may be used in some embodiments. Once the cure package is added (including the sulfur-based curing agent (e.g., a soluble sulfur), accelerator, and any remaining activator), the subsequent productive mixing step may be conducted at a temperature below the vulcanization (cure) temperature in order to avoid unwanted precure of the rubber composition, e.g., no more than 120°C, such as at least 40°C, or at least 60°C, e.g., for 2 minutes at a temperature of 105-115°C. Mixing may be performed, for example, by kneading the ingredients together in a Banbury mixer or on a milled roll. The rubber composition may be cooled to a temperature below 40 °C between each of the mixing stages. For example, the rubber composition may be dumped from the mixer after each mixing step, sheeted out from an open mill, and allowed to cool to below 40°C after each mixing step.

The resulting mixture may have a Mooney viscosity of 10-26 M.U., or18-23 M.U. As used herein, Mooney viscosity (ML 1+4) is measured in M.U. at 100°C according to ASTM D1646-19a, "Standard Test Methods for Rubber-Viscosity, Stress Relaxation, and Pre-Vulcanization Characteristics (Mooney Viscometer)."

The innerliner rubber composition thus formed is shaped into what is commonly referred to as a gum strip. The rubber gum strip may have a thickness in the range of 0.4 to 10 mm, or 0.5 to 5 mm, depending on the type, size and intended use of the tire. The gum strip can be produced by a press or passing a rubber compound through a mill, calender, multi-head extruder or other suitable shaping means. The uncured gum strip is then constructed as an inner surface (exposed inside surface) of an uncured rubber tire structure, also known as the carcass. The innerliner is then co-cured with the tire carcass during the tire curing operation under conditions of heat and pressure.

Vulcanization of the tire may be carried out, for example, at temperatures of 100° C to 200° C, such as 110° C to 180° C. Any of the usual vulcanization processes may be used such as heating in a press or mold, heating with superheated steam or hot salt or in a salt bath.

As a result of this vulcanization, the innerliner becomes an integral part of the tire by being co-cured therewith. The innerliner may thus be first constructed as compounded rubber gum strip defining an inner surface of an uncured rubber tire and then co-cured with the tire during a tire curing operation.

The pneumatic tire with the integral innerliner may be constructed in the form of a passenger tire, truck tire, or other type of bias or radial pneumatic tire. The rubber composition is not limited to use in tires and may also find application in rubber gloves, surgical instruments, and the like.

TABLE 1 illustrates example innerliner rubber compositions.

**TABLE 1: Ranges for example innerliner compositions (expressed in phr)**

| | **Example 1** | **Example 2** | **Example 3** |
|---|---|---|---|
| Polyisoprene, e.g., Natural Rubber | 0 - 40 | 20 - 35 | 25 - 35 |
| Halobutyl Rubber | 60 - 100 | 65 - 80 | 65 - 75 |
| Calcium Carbonate | 35 - 70 | 40 - 65 | 45 - 60 |
| Carbon black | 0 - 20 | 1 - 12 | 2 - 10 |
| Fatty Acids | 0 - 10 | 2 - 10 | 3 - 8 |
| Oil | 0 - 4 | 0.5 - 3 | 1 - 2 |
| Plasticizer | 0 - 4 | 0 - 3 | 0.5 - 2 |
| Tackifier resin | 0 - 2 | 0 - 2 | 0 - 2 |
| Sulfur (may be omitted when natural rubber is not used) | 0.3 - 1.5 | 0.4 - 1.0 | 0.6 - 0.8 |
| ZnO | 1 - 7 | 2 - 6 | 3 - 5 |
| Accelerator | 0.5 - 8 | 1.5 - 7 | 1.5 - 6 |

Without intending to limit the scope of the exemplary embodiment, the following examples illustrate preparation of the exemplary rubber composition, innerliners, tires including the inner liners, and properties thereof.

### EXAMPLES

Butyl rubber-type rubber compositions A-H are prepared using the ingredients shown in TABLE 2.

In the non-productive stage, natural rubber, halobutyl rubber, calcium carbonate, carbon black (where used), fatty acid, and processing aids, where used, are combined in an electric mixer and mixed for 2-3 minutes, then dropped from the mixer at a temperature of about 140°C. In the productive stage, sulfur zinc oxide, and accelerators are added to the mixture and mixed for about two minutes, then dropped from the mixer at a temperature of about 110°C.

The mixture is formed into gum strips and cured for about 23 minutes at 170°C.

**TABLE 2: Innerliner compositions (in phr)**

| | Ex. A | Ex. B | Ex C | Ref. 1 | Ref. 2 | Ref. 3 |
|---|---|---|---|---|---|---|
| Natural Rubber | 35 | 25 | 30 | 0 | 25 | 20 |
| Bromobutyl rubber | 65 | 75 | 70 | 100 | 75 | 68 |
| SBR | 0 | 0 | 0 | 0 | 0 | 16.5 |
| Calcium carbonate | 45 | 45 | 55 | 0 | 0 | 40 |
| Carbon black¹ | 10 | 7 | 2 | 64 | 64 | 41 |
| Fatty acids² | 4 | 4 | 4 | 2 | 1.1 | 2 |
| Oil ³ | 2 | 2 | 2 | 10.8 | 12 | 9 |
| Plasticizer⁴ | 2 | 2 | 2 | 8 | 0 | 8 |
| Tackifier ⁵ | - | - | - | 1 | 4 | 2.2 |
| Sulfur ⁶ | 0.7 | 0.7 | 0.7 | 0.5 | 0.3 | 1.5 |
| Zinc Oxide | 4 | 4 | 4 | 1 | 4. | 4.3 |
| Accelerators | 5.5⁸ | 5.5⁸ | 5.5⁸ | 0.4 | 1.5 | 1.2 |
| Total Parts | 173.2 | 170.2 | 175.2 | 187.7 | 187.4 | 213.4 |

| | | | | | | |
|---|---|---|---|---|---|---|
| ¹ Carbon black, ASTM grade N660. ² Mixture of fatty acids, predominantly stearic acid ³ Mixture of Naphthenic and Paraffinic oils ⁴ Mixture of Alkylated and Aromatic Hydrocarbon Resins ⁵Phenol Formaldehyde resin ⁶ Elemental Sulfur ⁷ 2,2'-dithiobis(benzothiazole) (MBTS) ⁸ Mixture of MBTS, N-cyclohexyl-2-benzothiazolesulfenamide (CBS), and poly-tert-butylphenol disulfide accelerators. | | | | | | |

### Evaluation of Rubber Compositions

### Compound Testing

The following tests are performed on the innerliner samples:
The G' (storage modulus) and G" (loss modulus) in MPa are determined with a Rubber Process Analyzer. Results are obtained at 100°C, for 1%, 10%, and 50% strain and a frequency of 1 Hertz. Tan δ, the ratio of G" to G' is determined for the samples at 10% strain, 100°C, and 1 Hertz. Lower values of G" are considered better.

Air diffusion tests are performed on cured samples having a length of about 150 mm and a thickness of 1.27 mm ± 20%. The tests used an air diffusion instrument designed by Cooper Tire & Rubber Company, Findlay, Ohio, under an air pressure of 3.45 bars (-3.52 kg/cm²) at a temperature of 70°C.

Results are shown in TABLE 3. Conventional innerliners for passenger tires, denoted Refs 1-3, are also evaluated.

**TABLE 3: Innerliner Results**

| | Ex. A | Ex. B | Ex. C |
|---|---|---|---|
| **RPA 505 (Rubber Process Analyzer)** | | | |
| G' (1%;100°C;1Hz), MPa | 0.424 | 0.362 | 0.3789 |
| G" (1%;100°C;1Hz), MPa | 0.0585 | 0.062 | 0.0446 |
| G' (50%;100°C;1Hz), MPa | 0.3395 | 0.278 | 0.3014 |
| G" (50%;100°C;1 Hz), MPa | 0.0525 | 0.0525 | 0.0469 |
| Tan δ (10%;100°C;1 Hz) | 0.143 | 0.173 | 0.1459 |

| **AIR DIFFUSION** | | | |
|---|---|---|---|
| Permeability at 70°C (cm²/atm·sec) | 6.6E-08 | 5.1E-08 | 6.3E-08 |

**TABLE 3: Innerliner Results (cont.)**

| | Ref. 1 | Ref. 2 | Ref. 3 |
|---|---|---|---|
| **RPA 505 (Rubber Process Analyzer)** | | | |
| G' (1%;100°C;1Hz), MPa | 0.7054 | 0.8293 | 0.7868 |
| G" (1%;100°C;1Hz), MPa | 0.1372 | 0.1323 | 0.112 |
| G' (50%;100°C;1Hz), MPa | 0.334 | 0.415 | 0.4285 |
| G" (50%;100°C;1 Hz), MPa | 0.0814 | 0.081 | 0.0803 |
| Tan δ (10%;100°C;1 Hz) | 0.2398 | 0.197 | 0.1715 |

| **AIR DIFFUSION** | | | |
|---|---|---|---|
| Permeability at 70°C (cm²/atm·sec) | 4.1E-08 | 7.0E-08 | 9.2E-08 |

As can be seen, Examples A, B, and C are softer materials than the reference samples (conventional innerliners), in general, as evidenced by the loss modulus G" results.

### Tire testing

Air diffusion tests are performed on passenger car tires with integral innerliners formed from some of the compositions shown in Table 2. The innerliners have a thickness of 1.2 mm in the uncured state. Passenger tires, denoted Refs 1-3, are also evaluated at the same innerliner thickness. Temperatures of 45±2°C for 15 days and 21°±3C for 60 days were used for measuring accelerated air retention and air diffusion, respectively.

Rolling resistance is determined according to ISO 28580:2009, "Passenger Car, Truck And Bus Tyres - Methods Of Measuring Rolling Resistance - Single Point Test And Correlation Of Measurement Results." ISO 28580:2009 specifies methods for measuring rolling resistance, under controlled laboratory conditions, for new pneumatic tires designed primarily for use on passenger cars, trucks and buses. The tests used passenger tire test conditions: Load 80%, Inflation 2.1 SL/2.5XL, at 25°C, at a speed of 80km/hr. (tested on 205/55R16 tires) after conditioning for 3 hrs at test room temperature and a 30 mins warm-up. Results are shown in TABLE 4.

**TABLE 4: Performance Results for Tires**

| Tire reference | Tire 1 | Tire 2 | Tire 3 | Tire 4 | Tire 5 | Tire 6 |
|---|---|---|---|---|---|---|
| Innerliner | Ref. 1 | Ref. 2 | Ref. 3 | Ex. A | Ex. B | Ex. C |
| Liner green gauge (mm) | 1.2 | 1.2 | 1.2 | 1.2 | 1.2 | 1.2 |
| Rolling Resistance Coefficient (ISO) (kg/t) | 5.28 | 5.07 | 5.04 | 4.92 | 4.94 | 4.97 |
| % Rolling Resistance gain vs. Ref. 1 | 100.0 | 104.1 | 104.7 | 107.1 | 106.8 | 106.1 |
| Accelerated Air diffusion, % loss in air pressure per month | 6.12 | 8.54 | 10.31 | 8.69 | 8.43 | 7.78 |

As shown in Table 4, tires 4, 5 and 6, with the exemplary innerliners, have a lower rolling resistance coefficient (<5 kg/t) than tires 1-3 with conventional innerliners. The gain in Rolling Resistance is 2-7% versus the conventional innerliners while keeping the air permeability performance within the range of conventional innerliners. Overall, the exemplary innerliners provide a better compromise between rolling resistance and air permeability.

Overall, the exemplary innerliners show benefits in low rolling resistance while maintaining good air retention of the tires.

The exemplary innerliner is strain-controlled so lower G" (loss modulus) gives a lower rolling resistance.

FIGURE 2 illustrates that Examples A, B, and C all fall within a target zone of both low G" and low air diffusion.

Other physical tests performed on the innerliner compositions compared favorably with those of conventional innerliners and are not included here.

The soft innerliners disclosed herein provide low rolling resistance and good air retention in consumer tires. Another advantage is that using calcium carbonate and lower amounts of carbon black for forming the innerliner of a tire can reduce the overall cost of the innerliner, when compared with the reference tires.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention may be used together with ranges or amounts for any of the other elements.

## Claims

1. A rubber composition for an innerliner (30), the rubber composition comprising:
100 phr of elastomers, comprising at least 60 phr of a butyl rubber and 0 to 40 phr of a diene-based rubber;
35 to 70 phr of a reinforcing filler; and
a curing system for curing the elastomers.

2. The rubber composition of claim 1, wherein the rubber composition comprises at least 65 phr of the butyl rubber and/or no more than 80 phr of the butyl rubber.

3. The rubber composition of claim 1 or 2, wherein the rubber composition includes at least 20 phr of the diene-based rubber and/or no more than 35 phr of the diene-based rubber.

4. The rubber composition of at least one of the previous claims, wherein the diene-based rubber comprises a polyisoprene.

5. The rubber composition of at least one of the previous claims, wherein elastomers other than the butyl rubber and the polyisoprene are present in the rubber composition at no more than 10 phr, or no more than 5 phr.

6. The rubber composition of at least one of the previous claims, wherein the reinforcing filler comprises at least one of calcium carbonate and magnesium carbonate, preferably 35 to 70 phr of the at least one of the calcium carbonate and the magnesium carbonate.

7. The rubber composition of at least one of the previous claims, wherein the reinforcing filler comprises rubber-reinforcing carbon black and the rubber composition comprises 1 to 20 phr, or no more than 12 phr of carbon black.

8. The rubber composition of at least one of the previous claims, wherein the reinforcing filler comprises calcium carbonate and a rubber-reinforcing carbon black in a ratio by weight of at least 4:1, or at least 5:1, and/or up to 30:1.

9. An innerliner formed by curing the rubber composition of at least one of the previous claims.

10. An innerliner composed of or formed from:
25 to 35 phr of natural rubber;
65 to 75 phr of a halobutyl rubber;
45 to 60 phr of calcium carbonate;
2 to 12 phr of carbon black;
optionally, at least one of an oil, a plasticizer, and a tackifier resin;
a sulfur based curing agent;
at least 1 phr of zinc oxide; and
a cure accelerator.

11. A pneumatic tire comprising the innerliner (30) of claim 9 or 10.

12. A method of forming an innerliner (30) of a tire (10), the method comprising:
forming a mixture comprising 100 phr of elastomers, the elastomers comprising at least 60 phr of a butyl rubber, and up to 40 phr of polyisoprene; 35 to 70 phr of a reinforcing filler comprising calcium carbonate and carbon black; and at least one of zinc oxide and a sulfur-based curing agent;
shaping the mixture to form a gum strip; and
curing the gum strip to form the innerliner (30) of the tire (10).

13. The method of claim 12, wherein the formed mixture has a Mooney viscosity in a range of for 10-26 M.U.

14. The method of claim 12 or 13, wherein in the curing, the innerliner (30) becomes an integral part of the tire (10).
